# EUROPÄISCHE PATENTSCHRIFT

(11) **EP 4 543 579 B1**
(45) Veröffentlichungstag und Bekanntmachung des Hinweises auf die Patenterteilung: **01.04.2026**
(21) Anmeldenummer: 23733750.6
(22) Anmeldetag: 19.06.2023
(51) Int. Cl.: B01F 25/46, B01F 25/442

(54) **HOMOGENISIERVENTIL**
HOMOGENIZING VALVE
SOUPAPE D'HOMOGÉNÉISATION

(30) Priorität: 22.06.2022 DE 102022115580
(43) Veröffentlichungstag der Anmeldung: 30.04.2025
(73) Patentinhaber: Hammelmann GmbH, 59302 Oelde (DE)
(72) Erfinder: BANDINI, Mauro, 43121 Parma (IT); FERSINI, David, 43052 Colorno (Parma) (IT); STOFFERS, Fabian, 33378 Rheda-Wiedenbrück (DE); HELMIG, Egbert, 59320 Ennigerloh (DE)
(74) Vertreter: Kleine, Hubertus
(86) Internationale Anmeldenummer: PCT/EP2023/066450
(87) Internationale Veröffentlichungsnummer: WO 2023/247434

(56) Entgegenhaltungen:
- JP-A- S 621 444
- US-A1- 2009 141 584
- US-B1- 6 502 979

## Beschreibung

Die vorliegende Erfindung betrifft ein Homogenisierventil gemäß dem Oberbegriff des Anspruchs 1 sowie ein weiteres Homogenisierventil gemäß dem Oberbegriff des Anspruchs 19.

Derartige Homogenisierventile, beispielsweise bekannt aus der US 6 502 979 B1 oder der JP S62 1444 A, dienen dazu, die unterschiedlichen Bestandteile in Fruchtsäften oder Milchprodukten oder dergleichen gleichmäßig zu zerteilen und homogen im Medium zu verteilen. Dazu wird das zu homogenisierende Medium unter hohem Druck (üblicherweise größer als 150 bar) über eine Scherkante geführt, hinter der das zu homogenisierende Medium expandiert und dabei insbesondere Fruchtfasern in einem Fruchtsaft bzw. Fetttropfen in Emulsionen wie Milch wirksam zerkleinert werden. US6502979 offenbart ein Homogenisierungsventil gemäß dem Oberbegriff der Ansprüche 1 und 19.

Insbesondere beim Einsatz hoher Drücke zur Homogenisierung sind große Verstellkräfte zur Einstellung eines Homogenisierspaltes in dem Homogenisierungsventil notwendig. Die benötigten großen Verstellkräfte resultieren dabei aus dem anstehenden Betriebsdruck, der auf druckbeaufschlagte Flächen des Ventilkörpers in Verstellrichtung des Ventilkörpers wirken.

Aufgabe der vorliegenden Erfindung ist es, ein Homogenisierventil bereitzustellen, dessen Ventilkörper mit deutlich geringeren Verstellkräften steuerbar bzw. bewegbar ist.

Diese Aufgabe wird durch ein Homogenisierventil mit den Merkmalen des Anspruchs 1 gelöst.

Das erfindungsgemäße Homogenisierventil für ein unter Systemdruck stehendes zu homogenisierendes Medium weist ein Ventilgehäuse mit einem Eingangskanal und einem Ausgangskanal für das Medium auf.

Das Homogenisierventil weist des Weiteren einen in dem Ventilgehäuse angeordneten Ventilsitz mit einer Aufnahme auf, durch die sich ein Ventilkörper in Richtung seiner Längsachse bewegbar erstreckt.

In der Aufnahme des Ventilsitzes und/oder der Mantelaußenfläche des Ventilkörpers ist eine mit dem Eingangskanal verbundene Druckkammer angeformt.

Des Weiteren ist eine Stelleinheit vorgesehen, die mit dem Ventilkörper in Wirkverbindung steht. Mit der Stelleinheit ist die axiale Position des Ventilkörpers in der Aufnahme einstellbar. Als axiale Bewegung ist dabei eine Bewegung axial zu einer gedachten Mittelachse der Aufnahme zu verstehen.

Durch Verschieben des Ventilkörpers in dem Ventilsitz ist ein Strömungswiderstand vom Eingangskanal zum Ausgangskanal regelbar.

Zwischen der die Aufnahme bildenden Innenwand des Ventilsitzes und dem Ventilkörper ist beidseits der Druckkammer, betrachtet in Verschieberichtung des Ventilkörpers, jeweils ein Scherspalt, gebildet durch eine Messerkante und einem der Messerkante gegenüber liegender konisch geformten Wandungsbereich und eine Expansionskammer ausgebildet, die in Durchflussrichtung stromabwärts hinter dem Scherspalt vorgesehen ist und mit dem Ausgangskanal verbunden ist.

Durch die Anordnung jeweils eines solchen Scherspaltes beidseits der Drucckammer wirkt auf den bewegbaren Ventilkörper quasi keine resultierende Kraft auf den Ventilkörper in Richtung der Längsachse des Ventilkörpers, die der Bewegungsrichtung des Ventilkörpers entspricht.

Dementsprechend ist eine Einstellung des Scherspaltes durch Verschieben des Ventilkörpers mithilfe der Stelleinheit mit äußerst geringem Kraftaufwand ermöglicht.

Vorteilhafte Ausführungsvarianten der Erfindung sind Gegenstand der Unteransprüche.

Gemäß einer vorteilhaften Ausführungsvariante ist die Länge einer ersten der Messerkanten nahe der Stelleinheit in Umfangsrichtung größer als die Länge einer zweiten der Messerkanten, die entfernt von der Stelleinheit angeordnet ist.

Dies ermöglicht einen äußerst einfachen Einbau des Ventilkörpers in den Ventilsitz in axialer Richtung.

Die Messerkanten sind nach einer bevorzugten Weiterbildung in Richtung der Längsachse des Ventilkörpers betrachtet doppelt konisch geformt
Die Messerkanten sind gemäß einer ersten bevorzugten Ausführungsvariante an einer Mantelaußenfläche des Ventilkörpers zwischen in Verschieberichtung des Ventilkörpers konisch geformten Bereichen der Aufnahme positioniert.

Insbesondere eine Anformung der Messerkanten an der Mantelaußenfläche des Ventilkörpers ist bei der Ausformung des Ventilkörpers in äußerst präziser Weise möglich.

Gemäß einer weiteren Ausführungsvariante sind die Messerkanten als an der Mantelaußenfläche des Ventilkörpers befestigte separate Bauteil ausgebildet. Diese Bauweise ermöglicht die Fertigung der Bauteile des Ventilkörpers aus unterschiedlichen Materialien. So können insbesondere die Messerkanten aus einem besonders harten Material gefertigt sein, um deren Lebensdauer weiter zu erhöhen.

Denkbar ist gemäß einer alternativen Ausführungsvariante auch eine umgekehrte Anordnung, bei der die Messerkanten an einer Innenfläche des Ventilsitzes zwischen in Verschieberichtung des Ventilkörpers konisch geformten Bereichen der Mantelaußenfläche des Ventilkörpers positioniert sind.

Beide Ausführungsvarianten ermöglichen in einfacher Weise die Einstellung des Scherspaltes durch Verschieben des Ventilkörpers in dem Ventilsitz.

Gemäß einer weiteren bevorzugten Ausführungsvariante sind an Innenflächen des Ventilsitzes und Mantelflächen des Ventilkörpers Führungsflächen vorgesehen, wobei an den Führungsflächen des Ventilsitzes und/oder des Ventilkörpers mit der jeweiligen Expansionskammer verbundene Nuten eingebracht sind.

Die Nuten bewirken dabei ein zusätzliches gegenläufiges Anströmen des expandierten Mediums durch die Kanalisierung des Mediums beim Eintritt aus der Expansionskammer in die Nuten.

Gemäß einer bevorzugten Weiterbildung erstrecken sich die Nuten linear parallel zur Bewegungsrichtung des Ventilkörpers. Denkbar ist auch eine gekrümmte Ausbildung der Nuten.

Die Nuten sind dabei gemäß einer bevorzugten Ausführungsvariante in die Führungsflächen des Ventilkörpers eingeformt.

In einer alternativen Ausführungsvariante sind die Nuten in die Führungsfläche des Ventilsitzes eingeformt.

Die Führungsflächen des Ventilkörpers und des Ventilsitzes sind gemäß einer weiteren bevorzugten Ausführungsvariante in Richtung der Längsachse des Ventilkörpers konisch geformt.

In einer alternativen Ausführungsvariante sind die Führungsflächen des Ventilkörpers und des Ventilsitzes in Richtung der Längsachse des Ventilkörpers zylindrisch geformt.

Diese Ausführungsvariante ermöglicht eine nochmals exaktere Führung des Ventilkörpers im Ventilsitz.

Gemäß einer weiteren bevorzugten Ausführungsvariante sind im Ventilgehäuse stromabwärts des Ventilkörpers mit dem Auslass verbundene Kanäle vorgesehen.

Diese Kanäle münden gemäß einer bevorzugten Weiterbildung in einen Mischbereich des Auslasses oder eine dem Auslass vorgeschaltete Mischkammer, wobei stromaufwärts in jedem der Kanäle eine Düse angeordnet ist, deren Strahlrichtung zueinander ausgerichtet ist.

Mit diesen Düsen ist ein gegenseitiges Anströmen des bereits expandierten Mediums ermöglicht, was die Qualität der Homogenisierung weiter erhöht.

In einer weiteren bevorzugten Ausführungsvariante ist ein Durchmesser der konisch geformten Aufnahme und des mit konisch geformter Mantelaußenfläche ausgebildeten Teils des Ventilkörpers sich zur Stelleinheit hin vergrößernd ausgebildet.

Der Ventilsitz ist bevorzugt in einer Aufnahme des Ventilgehäuses bewegungsfest eingebaut.

Denkbar ist auch, als alternative Ausführungsvariante, den Ventilsitz als Bestandteil des Ventilgehäuses auszubilden.

In einer weiteren bevorzugten Ausführungsvariante ist zwischen der Stelleinheit und dem Ventilkörper eine elastische Baueinheit angeordnet.

Die bevorzugt als Federpaket mit mindestens zwei Tellerfedern ausgebildete elastische Baueinheit ermöglicht so in einfacher Weise die Vermeidung einer Verstopfung im Druckraum, da bei Ansteigen des Betriebsdruckes der Ventilkörper aufgrund der unterschiedlichen Flächen der Fläche der Messerkanten beidseits des Druckraums kurzzeitig, zur Druckentlastung, in Richtung der Stelleinheit bewegt wird, wodurch sich die Spalthöhe kurzzeitig vergrößert, bis der Ausgangs-Betriebdruck im Druckraum wieder erreicht ist und infolgedessen der Ventilkörper automatisch, durch die Kraft der elastischen Baueinheit zurück in seine Ausgangsstellung gedrückt wird.

Eine weitere alternative Ausführungsvariante eines erfindungsgemäßen Homogenisierventils weist ein Ventilgehäuse mit einem Ausgangskanal für das Medium auf sowie einen in dem Ventilgehäuse entlang einer Verschiebungsachse angeordneten Ventilsitz mit einer zumindest teilweise konisch geformten Aufnahme, in der ein am Ventilgehäuse festgelegter Ventilkörper mit zumindest teilweise konisch geformter Mantelaußenfläche und einem Eingangskanal gelagert ist.

Mit dem Eingangskanal ist eine Druckkammer verbunden, die in der Aufnahme des Ventilsitzes und/oder der Mantelaußenfläche des Ventilkörpers angeformt ist.

Mit dem Ventilsitz ist eine Stelleinheit in Wirkverbindung. Ein Mediumdurchfluss von dem Eingangskanal zum Ausgangskanal ist hier durch Zusammenspiel des Ventilkörpers mit dem Ventilsitz regelbar.

Auch hier ist zwischen der die Aufnahme bildenden Innenwand des Ventilsitzes und dem Ventilkörper in Verschieberichtung des Ventilkörpers beidseits der Druckkammer jeweils ein durch eine Messerkante und einem dieser gegenüber konisch geformten Wandungsbereich gebildeter Scherspalt und in Durchflussrichtung stromabwärts hinter dem Scherspalt eine mit dem Ausgangskanal verbundene Expansionskammer ausgebildet.

Auch bei dieser Ausführungsvariante ergibt sich durch die zentrale Einspeisung des zu homogenisierenden Mediums durch den Ventilkörper hindurch in die Druckkammer, von wo das Medium in Verschieberichtung des Ventilkörpers weiter über die Messerkanten strömt, eine mit sehr geringem Kraftaufwand ermöglichte Verstellung des Scherspaltes, hier durch Verschieben des Ventilsitzes.

Nachfolgend werden bevorzugte Ausführungsbeispiele anhand der beiliegenden Zeichnungen näher erläutert. Es zeigen:
- Figur 1: eine schematische Schnittansicht durch eine Ausführungsvariante eines erfindungsgemäßen Homogenisierventils mit fest eingebautem Ventilsitz und axial bewegbarem Ventilkörper,
- Figur 2: eine der Figur 1 entsprechende Schnittansicht mit Draufsicht auf einen nicht geschnittenen Ventilkörper,
- Figur 3: eine der Figur 1 entsprechende Schnittansicht einer weiteren Ausführungsvariante eines Homogenisierventils mit zusätzlichen Düsen,
- Figur 4: eine isometrische Einzelansicht einer Ausführungsvariante eines Ventilkörpers mit daran angeformten Messerkanten und mit Nuten versehenen Führungsflächen,
- Figur 5: eine Schnittansicht durch den in Figur 4 gezeigten Ventilkörper, eingesetzt in einen Ventilsitz,
- Figur 6: eine isometrische Schnittdarstellung durch einen Ventilsitz mit im Aufnahmeraum angeordneten Messerkanten und Führungsflächen mit darin angebrachten Nuten,
- Figur 7: eine Schnittansicht durch den in Figur 6 gezeigten Ventilsitz mit darin eingeschobenem Ventilkörper mit konisch geformter Mantelfläche,
- Figuren 8 und 9: den Figuren 5 und 7 entsprechende Schnittdarstellungen durch weitere Ausführungsvarianten von Ventilsitzen und darin aufgenommenen Ventilkörpern,
- Figur 10: eine schematische Schnittdarstellung einer weiteren Ausführungsvariante eines erfindungsgemäßen Homogenisierventils mit bewegbarem Ventilsitz und festem Ventilkörper und
- Figur 11: eine der Figur 1 entsprechende Darstellung einer weiteren Ausführungsvariante eines erfindungsgemäßen Homogenisierventils mit zusätzlicher elastischer Baueinheit zwischen Ventilkörper und Stelleinheit.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Homogenisierventils, Ventilgehäuse, Ventilsitz, Ventilkörper, Messerkanten, Expansionskammer und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

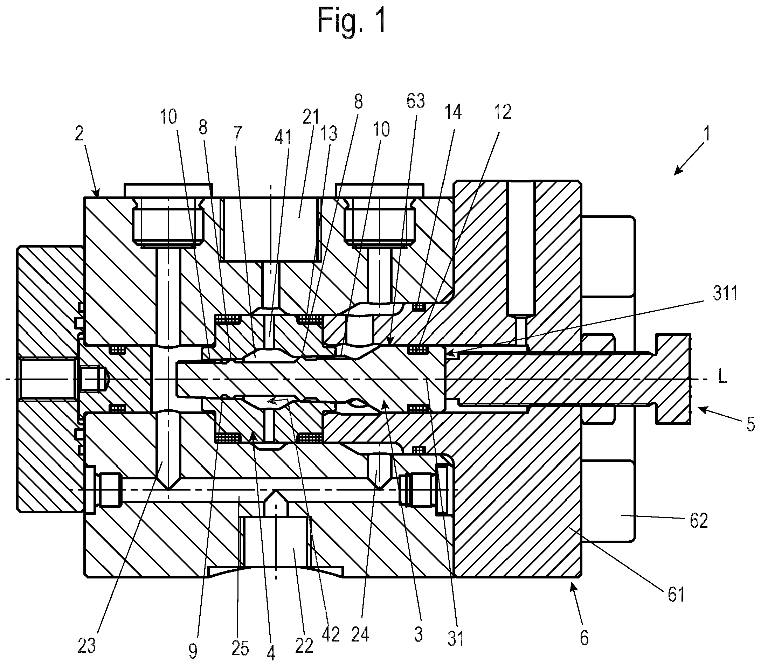

In Figur 1 ist mit dem Bezugszeichen 1 insgesamt eine Ausführungsvariante eines erfindungsgemäßen Homogenisierventils bezeichnet.

Das Homogenisierventil 1 weist ein Ventilgehäuse 2 mit einem Eingangskanal 21 und einem Ausgangskanal 22 für das zu homogenisierende Medium auf.

In dem Ventilgehäuse 2 ist ein Ventilsitz 4 angeordnet. Der Ventilsitz 4 weist eine Aufnahme 42 auf, durch die sich ein Ventilkörper 3 des Homogenisierventils 1 in Richtung seiner Längsachse L bewegbar erstreckt.

Der Ventilsitz 4 kann dabei, wie in Figur 1 dargestellt, als separates Bauteil ausgebildet sein, das, durch statische Hochdruckdichtungen 13 gegenüber dem Ventilgehäuse 2 abgedichtet in dem Ventilgehäuse 2 eingebaut ist.

Denkbar ist auch, den Ventilsitz 4 einstückig mit dem Ventilgehäuse 2 auszubilden.

Die Aufnahme 42 des Ventilsitzes 4 ist dabei als Durchgangsöffnung ausgebildet, durch die sich ein Ventilbereich 33 des Ventilkörpers 3 hindurch erstreckt.

Mithilfe einer Stelleinheit 5, beispielsweise in Gestalt einer manuell verdrehbaren Schraube, wie es in Figur 1 dargestellt ist, ist die axiale Position des Ventilkörpers 3 in der Aufnahme 42 einstellbar.

Die Stelleinheit 5 ist im gezeigten Ausführungsbeispiel in ein Führungsgehäuse 6 eingeschraubt, dessen Korpus 61 mithilfe von Fixierschrauben 62 fest mit dem Ventilgehäuse 2 verschraubt ist.

Das Führungsgehäuse 6 weist in der hier gezeigten Ausführungsvariante eine Aufnahme 63 auf, die sich in eine Aufnahme im Ventilgehäuse 2 hinein erstreckt. Die Innenflächen dieser Aufnahme 63 dienen dabei als Führungsflächen für einen Kopf 31 des Ventilkörpers 3, dessen Führungsmantel 312 Gleitflächen bildet, die an der Innenfläche der Aufnahme 63 des Führungsgehäuses 6 in Richtung der Längsachse L des Ventilkörpers 3 verschiebbar ist. Die Längsachse L ist dabei auch die (gedachte) Mittelachse der Aufnahme 42.

Zur Abdichtung des Kopfes 31 des Ventilkörpers 3 gegenüber den Innenwänden der Aufnahme 63 des Führungsgehäuses 6 ist der Führungsmantel 312 des Kopfes 31 des Ventilkörpers 3 mit einer Dichtungsaufnahmenut 313 versehen, in der eine dynamische Niederdruckdichtung 12 aufgenommen ist.

Die Stirnfläche 311 des Kopfes 31 des Ventilkörpers 3 dient als Anlagefläche für eine Stirnfläche der Stelleinheit 5.

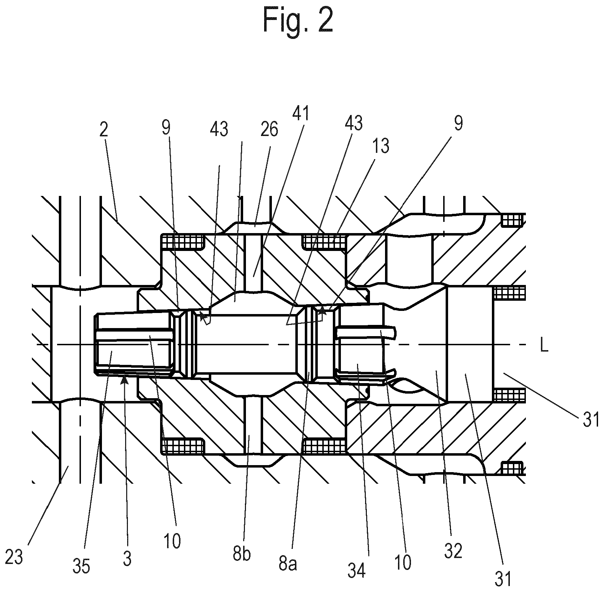

Wie weiter in den Figuren 1 und 2 dargestellt ist, ist in der Aufnahme 42 des Ventilsitzes 4 und/oder der Mantelaußenfläche 33 des Ventilkörpers 3 eine mit dem Eingangskanal 21 verbundene Druckkammer 7 angeformt.

Bei der in den Figuren 1 und 2 gezeigten Ausführungsvariante ist zur Ausbildung der Druckkammer 7 die Aufnahme 42 des Ventilsitzes 4 um einen Drucckammereingangskanal 41 herum ringförmig aufgeweitet.

Zwischen der die Aufnahme 42 bildenden Innenwand des Ventilsitzes 4 und dem Ventilkörper 3 ist, wie in den Figuren 1 und 2 weiter dargestellt ist, beidseits der Druckkammer 7 jeweils ein durch eine Messerkante 8a, 8b und einem dieser gegenüber konisch geformten Wandungsbereich gebildeter Scherspalt und in Durchflussrichtung stromabwärts hinter dem Scherspalt eine mit dem Ausgangskanal 22 verbundene Expansionskammer 9 ausgebildet.

Da das zu homogenisierende Medium unter hohem Druck, insbesondere mehr als 150 bar über den Eingangskanal 21 in die Druckkammer 7 geführt wird, wird durch die beidseitig der Druckkammer 7 vorgesehenen Messerkanten 8a, 8b erreicht, dass in Stellrichtung des Ventilkörpers 3, d.h. in Richtung einer Längsachse L, quasi keine Kraft durch das unter Hochdruck stehende Medium auf den bewegbaren Ventilkörper 3 ausgeübt wird.

Die Spalteinstellung des Scherspaltes erfolgt durch Verschieben des Ventilkörpers 3 relativ zum Ventilsitz 4. Das Spaltmaß des Scherspaltes zwischen den Messerkanten 8a, 8b und den konisch geformten Wandbereichen ist dabei für beide Seiten gleich groß.

Eine bevorzugte Einstellung des Spaltmaßes liegt, abhängig von dem zu homogenisierenden Medium, bevorzugt in einem Bereich zwischen 0,01 mm und 0,1 mm.

In sämtlichen der gezeigten Ausführungsvarianten ist die Länge der der Stelleinheit 5 nahen Messerkante 8a in Umfangsrichtung größer als die Länge der von der Stelleinheit 5 entfernten Messerkante 8b. Entsprechend ist der Innendurchmesser der Aufnahme 42 im Bereich nahe der Stelleinheit 5 größer als der Innendurchmesser der Aufnahme 42 entfernt von der Stelleinheit 5.

Die Messerkanten 8a, 8b sind bevorzugt doppelt konisch ausgebildet, mit einer den Scherspalt von der Druckkammer 7 her verengenden vorderen Flanke, einem sich an diese in Richtung der Längsachse L des Ventilkörpers 3 betrachtet anschließenden kurzen Abschnitt konstanter radialer Breite und einer sich an diesen Abschnitt anschließenden, den Scherspalt zur Expansionskammer 9 hin aufweitenden hinteren Flanke.

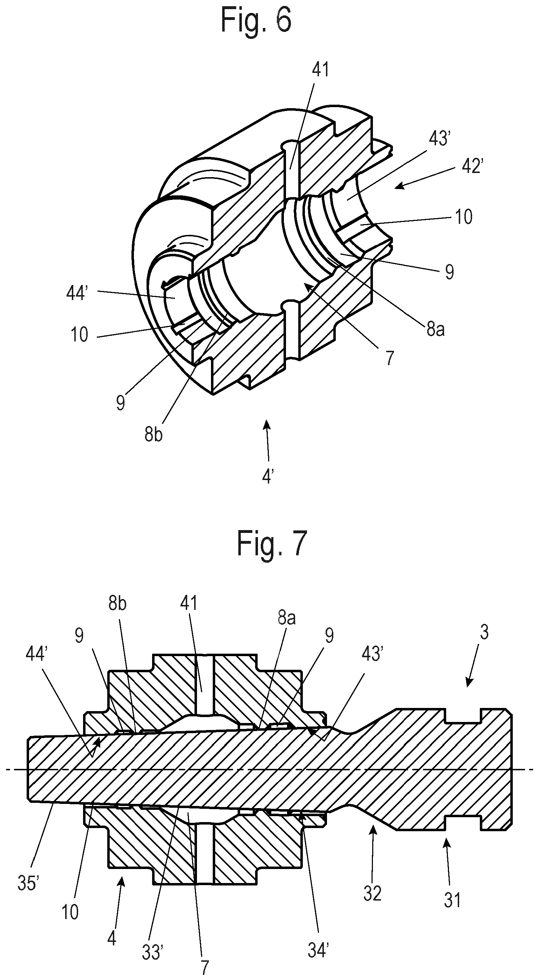

Während bei den in den Figuren 1 - 5 gezeigten Ausführungsvarianten des Homogenisierventils 1 die Messerkanten 8a, 8b an einer Mantelaußenfläche des Ventilkörpers 3 zwischen in Verschieberichtung des Ventilkörpers 3 konisch geformten Bereichen der Aufnahme 42 positioniert sind, ist bei der in den Figuren 6 und 7 gezeigten Ausführungsvariante der Ventilbereich 33' des Ventilkörpers 3 linear konisch ausgebildet.

Die Messerkanten 8a, 8b sind hier an einer die Aufnahme 42 bildenden Innenfläche des Ventilsitzes 4 zwischen in Verschieberichtung des Ventilkörpers 3 konisch geformten Bereichen der Mantelaußenfläche des Ventilkörpers 3 positioniert.

Auch die hier ringförmige Expansionskammer 9 ist bei der in den Figuren 6 und 7 gezeigten Ausführungsvariante in die die Aufnahme 42' bildende Innenwand des Ventilsitzes 4' eingeformt.

In beiden Ausführungsvarianten können die Messerkanten 8a, 8b am jeweiligen Bauteil, sprich am Ventilkörper 3 bei der in den Figuren 1 bis 5 gezeigten Ausführungsvariante bzw. am Ventilsitz 4 angeformt oder als separates Bauteil ausgebildet sein, das am Ventilkörper 3 bzw. am Ventilsitz4 befestigt ist.

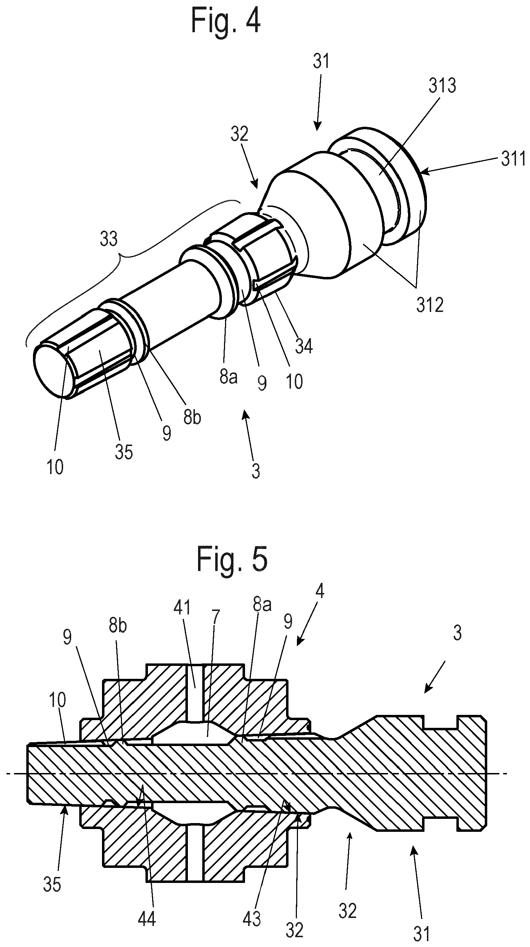

Wie weiter in den Figuren 2 und 4 gut zu erkennen ist, sind an Innenflächen des Ventilsitzes 4 und Mantelflächen des Ventilkörpers 3 Führungsflächen 34, 35, 43, 44 vorgesehen, wobei an den Führungsflächen 43, 44 des Ventilsitzes 4 oder Führungsflächen 34, 35 des Ventilkörpers 3 mit der jeweiligen Expansionskammer 9 verbundene Nuten 10 eingebracht sind.

Diese Nuten 10 sind bei der in den Figuren 1 - 5 gezeigten Ausführungsvariante des Homogenisierventils 1 in den Führungsflächen 34, 35 des Ventilkörpers 3 eingebracht. Die Nuten 10 erstrecken sich dabei bevorzugt linear parallel zur Bewegungsrichtung des Ventilkörpers 3.

Wie in Figur 6 gut zu erkennen ist, sind bei der alternativen Ausführungsvariante Homogenisierventils 1 die Nuten 10 in die Führungsflächen 43, 44 des Ventilsitzes 4 eingeformt.

Wie weiter in den Figuren 1 bis 8 zu erkennen ist, sind die Führungsflächen 34, 35, 43, 44 des Ventilkörpers 3 und des Ventilsitzes 4 in Richtung der Längsachse L des Ventilkörpers 3 konisch geformt.

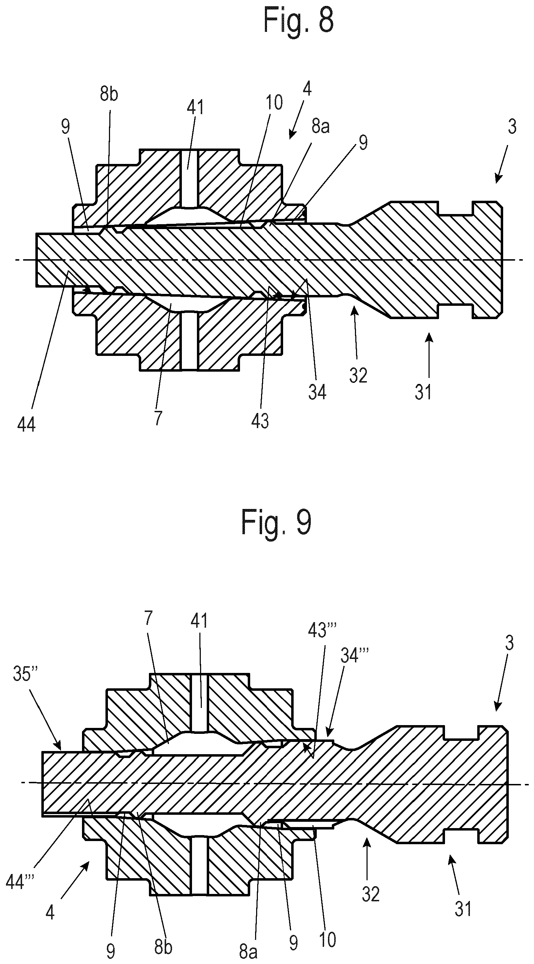

Bei der in Figur 9 beispielhaft gezeigten weiteren Ausführungsvariante sind die Führungsflächen 34‴, 35‴, 43‴ und 44‴ zylindrisch ausgebildet, wobei der Durchmesser des Ventilkörpers 3 und entsprechend der Aufnahme 42 des Ventilsitzes 4 im Bereich der Führungsflächen 34, 43‴ größer ist als der Durchmesser im Bereich der Führungsflächen 35"', 44‴.

Die Ausbildung dieser Führungsflächen 34‴, 35‴, 43‴, 44‴ als Zylinderflächen ermöglicht eine nochmals verbesserte Führung des Ventilkörpers 3 im Ventilsitz 4, weil in diesem Fall die Führungsflächen in jeder Stellposition des Ventilkörpers 3 in Gleitkontakt mit der Aufnahme 42 stehen.

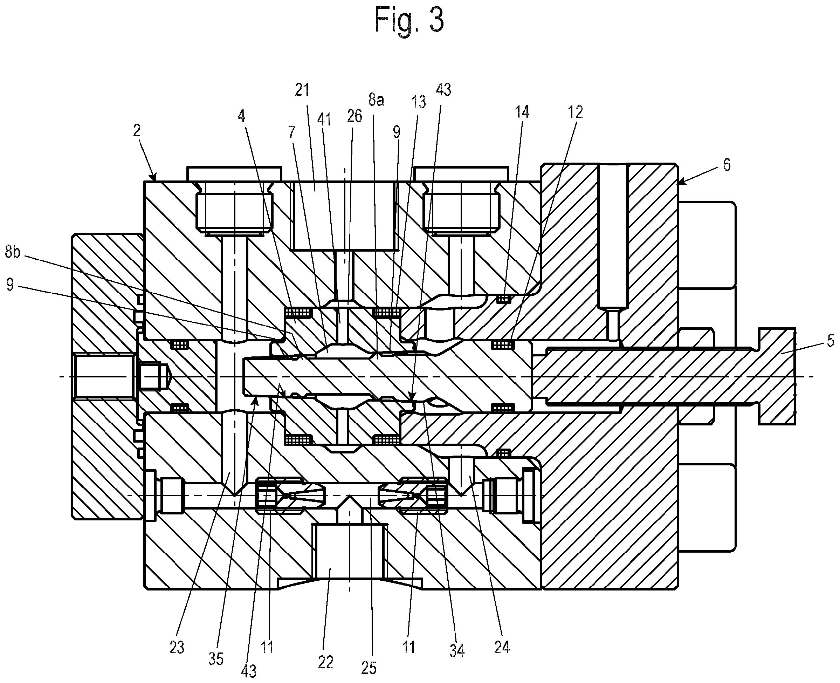

Wie weiter in der in Figur 3 gezeigten Ausführungsvariante dargestellt ist, sind im Ventilgehäuse 2 stromabwärts des Ventilkörpers 3 bevorzugt mit dem Auslass 22 verbundene Kanäle 23, 24 vorgesehen.

Diese Kanäle 23, 24 münden dabei in einen Mischbereich des Auslasses 22 oder eine dem Auslass vorgeschaltete Mischkammer 25, so dass das zu homogenisierende Medium nach erfolgter Expansion in den beiden Expansionskammern 9 im Mischbereich des Auslasses 22 bzw. in der diesem vorgeschalteten Mischkammer 25 bei gegenseitigem Anströmen wieder zusammengeführt werden.

Bevorzugt ist in jedem der Kanäle 23, 24 eine Düse 11 angeordnet, wobei die Strahlrichtungen der Düsen 11 so ausgerichtet sind, dass die beiden durch die jeweiligen Düsen 11 geleiteten Medienströme im Mischbereich des Auslasses 22 bzw. in der diesem vorgeschalteten Mischkammer 25 beschleunigt aufeinandertreffen.

Ein gegenseitiges Anströmen von Teilströmen des Mediums erfolgt darüber hinaus auch in den beiden Expansionskammern 9, dort im Übergangsbereich zu den Nuten 10, durch die das Medium aus dem Bereich des Ventilkörpers 3 in die Kanäle 23, 24 abgeführt wird.

Denkbar ist auch, wie es beispielhaft in der Figur 8 dargestellt ist, die Position der Messerkanten 8a, 8b und der Führungsflächen 34, 35, 43, 44 zu vertauschen, so dass das Medium nach Eintritt in die Druckkammer zunächst durch die Nuten 10 geführt wird und anschließend erst über die Messerkanten 8a, 8b in jeweilige Expansionskammern 9 geführt wird.

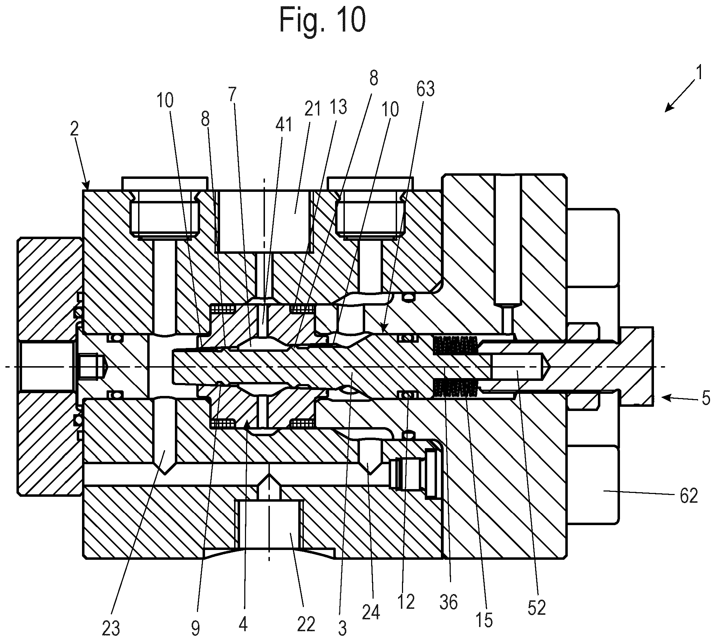

Bei der in Figur 10 gezeigten weiteren Ausführungsvariante ist zwischen der Stelleinheit 5 und dem Ventilkörper 3 eine elastische Baueinheit 15 angeordnet. Die hier als Federpaket mit mehreren, insbesondere mindestens zwei Tellerfedern ausgebildete elastische Baueinheit 15 dient dazu, bei im Betrieb zu stark ansteigendem Betriebsdruck, beispielsweise infolge einer Verstopfung in der Drucckammer 7, dass der Ventilkörper 3 sich zur Druckentlastung solange gegen die Kraft der elastischen Baueinheit 15 verschiebt und damit die Spalthöhe vergrößert, bis der Betriebsdruck wieder seine Ausgangsgröße erreicht, so dass der Ventilkörper 3 von der elastischen Baueinheit 15 zurück in die Ausgangsstellung gedrückt wird.

Die Bewegung des Ventilkörpers 3 gegen die Kraft der elastischen Baueinheit 15 erfolgt dabei aufgrund der Differenz zwischen der Fläche der Messerkante 8a auf der der Stelleinheit 5 nahen Seite der Druckkammer 7 und der Fläche der Messerkante 8b auf der der Stelleinheit 5 entfernten Seite der Druckkammer 7, wobei die Fläche der Messerkante 8a auf der der Stelleinheit 5 nahen Seite der Drucckammer 7 größer ist als die der Fläche der Messerkante 8b auf der der Stelleinheit 5 entfernten Seite der Druckkammer 7.

Durch Verstellen der Stelleinheit 5 ist in diesem Fall in erster Linie eine Einstellung der Haltekraft der elastischen Baueinheit 15 ermöglicht.

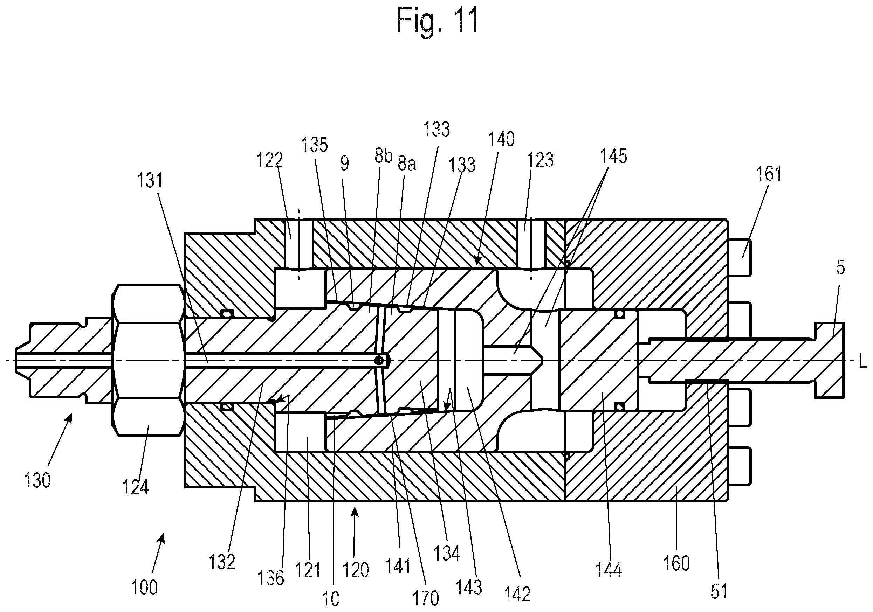

Eine nochmals weitere Ausführungsvariante eines solchen Homogenisierventils 100 ist in Figur 11 dargestellt.

Bei dieser Ausführungsvariante ist das Ventilgehäuse 120 mit Ausgangskanälen 122, 123 für das Medium ausgebildet. In dem Ventilgehäuse 120 ist ein entlang einer Verschiebungsachse L angeordneter Ventilsitz 140 vorgesehen, ebenfalls mit einer zumindest teilweise konisch geformten Aufnahme 142, in der ein am Ventilgehäuse 120 in diesem Fall festgelegter Ventilkörper 130 mit zumindest teilweise konisch geformter Mantelaußenfläche 133 und einem Einlass 131 gelagert ist.

Der Einlass 131 ist hier als entlang der Längsachse von einer Stirnseite in den Ventilkörper eingeformter Kanal ausgebildet, von dessen Ende mehrere Kanäle radial oder annähernd radial abzweigend in eine Druckkammer 170 münden, die in der Aufnahme 142 des Ventilsitzes 140 und/oder der Mantelaußenfläche 133 des Ventilkörpers 130 angeformt ist. Die Druckkammer 170 ist ebenfalls ringnutförmig ausgeführt, wie bei den in den Figuren 1 bis 9 gezeigten Ausführungsvarianten. Die Materialaussparung zur Ausbildung der Druckkammer 170 ist hier bevorzugt im Ventilkörper 130 vorgesehen.

Weiter ist bei dieser Ausführungsvariante eine Stelleinheit 150 mit dem Ventilsitz 140 in Wirkverbindung. Ein Mediumdurchfluss von dem Einlass 131 zu dem Ausgangskanal 122 im Ventilgehäuse 120 ist hier durch Verschieben des Ventilsitzes 140 relativ zu dem fest am Ventilgehäuse 120 montierten Ventilkörper 130 regelbar.

Auch hier ist zwischen der die Aufnahme 142 bildenden Innenwand des Ventilsitzes 140 und dem Ventilkörper 130 in Verschieberichtung des Ventilkörpers 130 beidseits der Druckkammer 170 jeweils ein durch eine Messerkante 8a, 8b und einem dieser gegenüber konisch geformten Wandungsbereich gebildeter Scherspalt und in Durchflussrichtung stromabwärts hinter dem Scherspalt eine mit dem Ausgangskanal 122 verbundene Expansionskammer 9 ausgebildet.

Weiter sind auch bei dieser Ausführungsvariante stromabwärts von den Expansionskammern 9 Nuten 10 vorgesehen, die ebenso entweder an der Mantelaußenfläche 133 des Ventilkörpers 130 oder an der die Aufnahme 142 bildenden Innenfläche des Ventilsitzes 140 angeformt sein können.

Die Messerkanten 8a, 8b werden im gezeigten Ausführungsbeispiel durch die Kanten der Mantelaußenfläche 133 des Ventilkörpers 130 am Übergang zu den Expansionskammern 9 gebildet.

### Bezugszeichenliste

- 1: Homogenisierventil

- 2: Ventilgehäuse
- 21: Eingangskanal
- 22: Ausgangskanal
- 23: Kanal
- 24: Kanal
- 25: Mischkammer
- 26: Ringkammer

- 3: Ventilkörper
- 31: Kopf
- 311: Stirnfläche
- 312: Führungsmantel
- 313: Dichtungsaufnahmenut
- 32: Übergangsbereich
- 33: Ventilbereich
- 34, 34', 34": Führungsfläche
- 35, 35', 35": Führungsfläche
- 36: Führungsstift

- 4: Ventilsitz
- 41: Druckkammereingangskanal
- 42: Aufnahme
- 43, 43', 43": Führungsfläche

- 5: Stelleinheit
- 51: Gewinde
- 52: Führungsaufnahme

- 6: Führungsgehäuse
- 61: Korpus
- 62: Fixierschraube
- 63: Aufnahme

- 7: Druckkammer
- 8a, b: Messerkante
- 9: Expansionskammer
- 10: Nut
- 11: Düse
- 12: dynamische Niederdruckdichtung
- 13: statische Hochdruckdichtung
- 14: Niederdruckdichtung
- 15: elastische Baueinheit

- 100: Homogenisierventil

- 120: Ventilgehäuse
- 121: Niederdruckraum
- 122: Ausgangskanal
- 123: Ausgangskanal

- 130: Ventilkörper
- 131: Einlass
- 132: Hals
- 133: Mantelaußenfläche
- 134: Kopf
- 135: konischer Bereich

- 140: Ventilsitz
- 141: Konischer Abschnitt
- 142: Aufnahme
- 143: Führungsfläche
- 144: Kopf
- 145: Kanal

- 160: Führungsgehäuse
- 161: Korpus
- 162: Fixierschraube
- 163: Ventilsitzaufnahme

- x, y: Richtung
- L: Längsachse

## Patentansprüche

1. Homogenisierventil (1) für ein unter Systemdruck stehendes zu homogenisierendes Medium, aufweisend,
- ein Ventilgehäuse (2) mit wenigstens einem Eingangskanal (21) und wenigstens einem Ausgangskanal (22) für das Medium,
- einen in dem Ventilgehäuse (2) angeordneten Ventilsitz (4) mit einer Aufnahme (42), durch die sich ein Ventilkörper (3) in Richtung seiner Längsachse (L) bewegbar erstreckt,
- eine mit dem Eingangskanal (21) verbundene Druckkammer (7), die in der Aufnahme (42) des Ventilsitzes (4) und/oder der Mantelaußenfläche (33) des Ventilkörpers (3) angeformt ist,
- einen mit dem Ventilkörper (3) in Wirkverbindung stehende Stelleinheit (5), mit der die axiale Position des Ventilkörpers (3) in der Aufnahme (42) einstellbar ist,
- ein Strömungswiderstand innerhalb der Aufnahme (42) durch Verschieben des Ventilkörpers (3) in dem Ventilsitz (4) regelbar ist,
**dadurch gekennzeichnet, dass** zwischen der die Aufnahme (42) bildenden Innenwand des Ventilsitzes (4) und dem Ventilkörper (3) in Verschieberichtung des Ventilkörpers (3) beidseits der Druckkammer (7) jeweils ein durch eine Messerkante (8a, 8b) und einem dieser gegenüber konisch geformten Wandungsbereich gebildeter Scherspalt und in Durchflussrichtung stromabwärts hinter dem Scherspalt eine mit dem Ausgangskanal (22) verbundene Expansionskammer (9) ausgebildet ist.

2. Homogenisierventil (1) nach Anspruch 1, **dadurch gekennzeichnet, dass** die Länge einer ersten der Messerkanten (8a) nahe der Stelleinheit (5) in Umfangsrichtung größer ist als die Länge einer zweiten der Messerkanten (8b) entfernt von der Stelleinheit (5).

3. Homogenisierventil (1) nach Anspruch 1 oder 2, **dadurch gekennzeichnet, dass** die Messerkanten (8a, 8b) in Richtung der Längsachse (L) des Ventilkörpers (3) betrachtet doppelt konisch geformt sind.

4. Homogenisierventil (1) nach einem der Ansprüche 1 bis 3, **dadurch gekennzeichnet, dass** die Messerkanten (8a, 8b) an einer Mantelaußenfläche des Ventilkörpers (3) zwischen in Verschieberichtung des Ventilkörpers (3) konisch geformten Bereichen der Aufnahme (42) positioniert, insbesondere angeformt oder befestigt sind.

5. Homogenisierventil (1) nach einem der Ansprüche 1 bis 3, **dadurch gekennzeichnet, dass** die Messerkanten (8a, 8b) an einer Innenfläche des Ventilsitzes (4) zwischen in Verschieberichtung des Ventilkörpers (3) konisch geformten Bereichen der Mantelaußenfläche des Ventilkörpers (3) positioniert, insbesondere angeformt oder befestigt sind.

6. Homogenisierventil (1) nach einem der vorstehenden Ansprüche, **dadurch gekennzeichnet, dass** an Innenflächen des Ventilsitzes (4) und Mantelflächen des Ventilkörpers (3) Führungsflächen (34, 35, 43, 44) vorgesehen sind, wobei an den Führungsflächen (34, 35, 43, 44) des Ventilsitzes (4) und/oder des Ventilkörpers (3) mit der jeweiligen Expansionskammer (9) verbundene Nuten (10) eingebracht sind.

7. Homogenisierventil (1) nach Anspruch 6, **dadurch gekennzeichnet, dass** die Nuten (10) sich linear parallel zur Bewegungsrichtung des Ventilkörpers (3) erstrecken.

8. Homogenisierventil (1) nach Anspruch 6, **dadurch gekennzeichnet, dass** die Nuten (10) sich gekrümmt zur Bewegungsrichtung des Ventilkörpers (3) erstrecken.

9. Homogenisierventil (1) nach einem der Ansprüche 6 bis 8, **dadurch gekennzeichnet, dass** die Nuten (10) in die Führungsflächen (33, 34) des Ventilkörpers (3) eingeformt sind.

10. Homogenisierventil (1) nach einem der Ansprüche 6 bis 8, **dadurch gekennzeichnet, dass** die Nuten (10) in die Führungsflächen (43, 44) des Ventilsitzes (4) eingeformt sind.

11. Homogenisierventil (1) nach einem der Ansprüche 6 bis 10, **dadurch gekennzeichnet, dass** die Führungsflächen (34, 35, 43, 44) des Ventilkörpers (3) und des Ventilsitzes (4) in Richtung der Längsachse (L) des Ventilkörpers (3) konisch geformt sind.

12. Homogenisierventil (1) nach einem der Ansprüche 6 bis 10, **dadurch gekennzeichnet, dass** die Führungsflächen (34, 35, 43, 44) des Ventilkörpers (3) und des Ventilsitzes (4) in Richtung der Längsachse (L) des Ventilkörpers (3) zylindrisch geformt sind.

13. Homogenisierventil (1) nach einem der vorstehenden Ansprüche, **dadurch gekennzeichnet, dass** im Ventilgehäuse (2) stromabwärts des Ventilkörpers (3) mit dem Auslass (22) verbundene Kanäle (23, 24) vorgesehen sind.

14. Homogenisierventil (1) nach Anspruch 13, **dadurch gekennzeichnet, dass** die Kanäle (23, 24) in einen Mischbereich des Auslasses (22) oder eine dem Auslass vorgeschaltete Mischkammer (25) münden.

15. Homogenisierventil (1) nach einem der vorstehenden Ansprüche, **dadurch gekennzeichnet, dass** ein Durchmesser der konisch geformten Aufnahme (42) und des mit konisch geformter Mantelaußenfläche (33) ausgebildeten Teils des Ventilkörpers (3) sich zur Stelleinheit (5) hin vergrößernd ausgebildet ist.

16. Homogenisierventil (1) nach einem der vorstehenden Ansprüche, **dadurch gekennzeichnet, dass** der Ventilsitz (4) in einer Aufnahme des Ventilgehäuses (2) bewegungsfest eingebaut oder als Bestandteil des Ventilgehäuses (2) ausgebildet ist.

17. Homogenisierventil (1) nach einem der vorstehenden Ansprüche, **dadurch gekennzeichnet, dass** zwischen der Stelleinheit (5) und Ventilkörper (3) eine elastische Baueinheit (15) angeordnet ist.

18. Homogenisierventil (1) nach Anspruch 17, **dadurch gekennzeichnet, dass** die elastische Baueinheit (15) als Federpaket mit wenigstens zwei Tellerfedern ausgebildet ist.

19. Homogenisierventil (100) für ein unter Systemdruck stehendes zu homogenisierendes Medium, aufweisend,
- ein Ventilgehäuse (120) mit wenigstens einem Ausgangskanal (122, 123) für das Medium,
- einen in dem Ventilgehäuse (120) entlang einer Verschiebungsachse (L) angeordneten Ventilsitz (140) mit einer zumindest teilweise konisch geformten Aufnahme (142), in der ein am Ventilgehäuse (120) festgelegter Ventilkörper (130) mit zumindest teilweise konisch geformter Mantelaußenfläche (133) und einem Eingangskanal (131) gelagert ist,
- eine mit dem Eingangskanal (134) verbundene Druckkammer (170), die in der Aufnahme (42) des Ventilsitzes (140) und/oder der Mantelaußenfläche (133) des Ventilkörpers (130) angeformt ist,
- einen mit dem Ventilsitz (140) in Wirkverbindung stehende Stelleinheit (150),
- ein Strömungswiderstand innerhalb der Aufnahme (142) durch Verschieben des Ventilkörpers (130) in dem Ventilsitz (140) regelbar ist,
**dadurch gekennzeichnet, dass** zwischen der die Aufnahme (42) bildenden Innenwand des Ventilsitzes (140) und dem Ventilkörper (130) in Verschieberichtung des Ventilkörpers (130) beidseits der Druckkammer (170) jeweils ein durch eine Messerkante (8a, 8b) und einem dieser gegenüber konisch geformten Wandungsbereich gebildeter Scherspalt und in Durchflussrichtung stromabwärts hinter dem Scherspalt eine mit dem Ausgangskanal (22) verbundene Expansionskammer (9) ausgebildet ist.

## Claims

1. Homogenizing valve (1) for a medium to be homogenized which is under system pressure, comprising,
- a valve housing (2) having at least one inlet channel (21) and at least one outlet channel (22) for the medium,
- a valve seat (4) arranged in the valve housing (2) with a receptacle (42) through which a valve body (3) extends movably in the direction of its longitudinal axis (L),
- a pressure chamber (7) which is connected to the inlet channel (21) and is formed in the receptacle (42) of the valve seat (4) and/or the outer jacket surface (33) of the valve body (3),
- an adjustment unit (5) which is operatively connected to the valve body (3) and with which the axial position of the valve body (3) in the receptacle (42) can be adjusted,
- a flow resistance within the receptacle (42) can be regulated by displacing the valve body (3) in the valve seat (4),
**characterized in that**
- between the inner wall of the valve seat (4) forming the receptacle (42) and the valve body (3), a shear gap, formed by a blade edge (8a, 8b) and a wall region which is conically shaped relative thereto, is formed in each case on both sides of the pressure chamber (7) in the direction of displacement of the valve body (3), and an expansion chamber (9) connected to the outlet channel (22) is formed downstream of the shear gap in the direction of flow.

2. Homogenizing valve (1) according to claim 1, **characterized in that** the length of a first of the blade edges (8a) close to the adjustment unit (5) is greater in the circumferential direction than the length of a second of the blade edges (8b) which is arranged at a distance from the adjustment unit (5).

3. Homogenizing valve (1) according to claim 1 or 2, **characterized in that** the blade edges (8a, 8b) are double-conical in shape when viewed in the direction of the longitudinal axis (L) of the valve body (3).

4. Homogenizing valve (1) according to one of claims 1 to 3, **characterized in that** the blade edges (8a, 8b) are positioned, in particular integrally formed or fastened, on an outer jacket surface of the valve body (3) between conically shaped regions of the receptacle (42) in the direction of displacement of the valve body (3).

5. Homogenizing valve (1) according to one of claims 1 to 3, **characterized in that** the blade edges (8a, 8b) are positioned on an inner surface of the valve seat (4) between regions of the outer jacket surface of the valve body (3) which are conically shaped in the direction of displacement of the valve body (3), in particular are integrally formed or fastened.

6. Homogenizing valve (1) according to one of the preceding claims, **characterized in that** guide surfaces (34, 35, 43, 44) are provided on the inner surfaces of the valve seat (4) and outer jacket surfaces of the valve body (3), wherein grooves (10) connected to the respective expansion chamber (9) are provided on the guide surfaces (34, 35, 43, 44) of the valve seat (4) and/or of the valve body (3).

7. Homogenizing valve (1) according to claim 6, **characterized in that** the grooves (10) extend linearly parallel to the direction of movement of the valve body (3).

8. Homogenizing valve (1) according to claim 6, **characterized in that** the grooves (10) extend in a curved manner with respect to the direction of movement of the valve body (3).

9. Homogenizing valve (1) according to one of claims 6 to 8, **characterized in that** the grooves (10) are formed in the guide surfaces (33, 34) of the valve body (3).

10. Homogenizing valve (1) according to one of claims 6 to 8, **characterized in that** the grooves (10) are formed in the guide surfaces (43, 44) of the valve seat (4).

11. Homogenizing valve (1) according to one of claims 6 to 10, **characterized in that** the guide surfaces (34, 35, 43, 44) of the valve body (3) and the valve seat (4) are conically shaped in the direction of the longitudinal axis (L) of the valve body (3).

12. Homogenizing valve (1) according to one of claims 6 to 10, **characterized in that** the guide surfaces (34, 35, 43, 44) of the valve body (3) and the valve seat (4) are cylindrically shaped in the direction of the longitudinal axis (L) of the valve body (3).

13. Homogenizing valve (1) according to one of the preceding claims, **characterized in that** channels (23, 24) connected to the outlet (22) are provided in the valve housing (2) downstream of the valve body (3).

14. Homogenizing valve (1) according to claim 13, **characterized in that** the channels (23, 24) open into a mixing region of the outlet (22) or a mixing chamber (25) upstream of the outlet.

15. Homogenizing valve (1) according to one of the preceding claims, **characterized in that** a diameter of the conically shaped receptacle (42) and of the part of the valve body (3) formed with a conically shaped outer jacket surface (33) is designed to increase towards the adjustment unit (5).

16. Homogenizing valve (1) according to one of the preceding claims, **characterized in that** the valve seat (4) is installed in a receptacle of the valve housing (2) in such a way that it cannot move or is designed as a component of the valve housing (2).

17. Homogenizing valve (1) according to one of the preceding claims, **characterized in that** an elastic unit (15) is arranged between the adjustment unit (5) and the valve body (3).

18. Homogenizing valve (1) according to claim 17, **characterized in that** the elastic unit (15) is designed as a spring assembly having at least two disk springs.

19. Homogenizing valve (100) for a medium to be homogenized which is under system pressure, comprising,
- a valve housing (120) with at least one outlet channel (122, 123) for the medium,
- a valve seat (140) arranged in the valve housing (120) along an axis of displacement (L) and having an at least partially conically shaped receptacle (142) in which a valve body (130) fixed to the valve housing (120) is mounted with an at least partially conically shaped outer jacket surface (133) and an inlet channel (131),
- a pressure chamber (170) connected to the inlet channel (134), which is formed in the receptacle (42) of the valve seat (140) and/or the outer jacket surface (133) of the valve body (130),
- an adjustment unit (150) operatively connected to the valve seat (140),
- a flow resistance within the receptacle (142) can be regulated by displacing the valve body (130) in the valve seat (140),
**characterized in that**
- a shear gap formed by a blade edge (8a, 8b) and a wall region which is conically shaped relative thereto is formed between the inner wall of the valve seat (140) forming the receptacle (42) and the valve body (130) on both sides of the pressure chamber (170) in the direction of displacement of the valve body (130), and an expansion chamber (9) connected to the outlet channel (22) is formed downstream of the shear gap in the direction of flow.

## Revendications

1. Soupape d'homogénéisation (1) pour un fluide à homogénéiser sous une pression de système, comprenant
- une cage de soupape (2) avec au moins un canal d'entrée (21) et au moins un canal de sortie (22) pour le fluide,
- un siège de soupape (4) disposé dans la cage de soupape (2) avec un logement (42) à travers lequel un corps de soupape (3) s'étend avec possibilité de déplacement dans la direction de son axe longitudinal (L),
- une chambre de pression (7) communiquant avec le canal d'entrée (21), qui est formée dans le logement (42) du siège de soupape (4) et/ou la surface extérieure d'enveloppe (33) du corps de soupape (3),
- une unité d'ajustement (5) en liaison active avec le corps de soupape (3), avec laquelle la
position axiale du corps de soupape (3) peut être ajustée dans le logement (42),
- une résistance d'écoulement à l'intérieur du logement (42) pouvant être régulée par le déplacement du corps de soupape (3) dans le siège de soupape (4),
**caractérisée en ce qu'**un espace de cisaillement est formé des deux côtés de la chambre de pression (7) dans le sens de déplacement du corps de soupape (3), entre la paroi intérieure du siège de soupape (4) formant le logement (42) et le corps de soupape (3), par une lame de sabre (8a, 8b) respective et une région de paroi de forme conique en face de celle-ci, et une chambre d'expansion (9) communiquant avec le canal de sortie (22) est formée derrière l'espace de cisaillement, en aval dans le sens d'écoulement.

2. Soupape d'homogénéisation (1) selon la revendication 1, **caractérisée en ce que** la longueur d'une première lame de sabre (8a) proche de l'unité d'ajustement (5) dans le sens de la circonférence est plus grande que la longueur d'une deuxième lame de sabre (8b) éloignée de l'unité d'ajustement (5).

3. Soupape d'homogénéisation (1) selon la revendication 1 ou 2, **caractérisée en ce que** les lames de sabre (8a, 8b), vues dans le sens de l'axe longitudinal (L) du corps de soupape (3), ont la forme d'un double cône.

4. Soupape d'homogénéisation (1) selon l'une des revendications 1 à 3, **caractérisée en ce que** les lames de sabre (8a, 8b) sont positionnées, en particulier formées ou fixées, sur une surface extérieure d'enveloppe du corps de soupape (3) entre des régions du logement (42) de forme conique dans le sens de déplacement du corps de soupape (3).

5. Soupape d'homogénéisation (1) selon l'une des revendications 1 à 3, **caractérisée en ce que** les lames de sabre (8a, 8b) sont positionnées, en particulier formées ou fixées, sur une surface intérieure du siège de soupape (4) entre des régions de la surface extérieure d'enveloppe du corps de soupape (3) ayant une forme conique dans le sens de déplacement du corps de soupape (3).

6. Soupape d'homogénéisation (1) selon l'une des revendications précédentes, **caractérisée en ce que** des surfaces de guidage (34, 35, 43, 44) sont prévues sur les surfaces intérieures du siège de soupape (4) et les surfaces d'enveloppe du corps de soupape (3), des rainures (10) qui communiquent avec la chambre d'expansion (9) correspondante étant formées sur les surfaces de guidage (34, 35, 43, 44) du siège de soupape (4) et/ou du corps de soupape (3).

7. Soupape d'homogénéisation (1) selon la revendication 6, **caractérisée en ce que** les rainures (10) s'étendent de façon linéaire parallèlement au sens de déplacement du corps de soupape (3).

8. Soupape d'homogénéisation (1) selon la revendication 6, **caractérisée en ce que** les rainures (10) s'étendent de façon incurvée par rapport au sens de déplacement du corps de soupape (3).

9. Soupape d'homogénéisation (1) selon l'une des revendications 6 à 8, **caractérisée en ce que** les rainures (10) sont formées dans les surfaces de guidage (33, 34) du corps de soupape (3).

10. Soupape d'homogénéisation (1) selon l'une des revendications 6 à 8, **caractérisée en ce que** les rainures (10) sont formées dans les surfaces de guidage (43, 44) du siège de soupape (4).

11. Soupape d'homogénéisation (1) selon l'une des revendications 6 à 10, **caractérisée en ce que** les surfaces de guidage (34, 35, 43, 44) du corps de soupape (3) et du siège de soupape (4) ont une forme conique dans le sens de l'axe longitudinal (L) du corps de soupape (3).

12. Soupape d'homogénéisation (1) selon l'une des revendications 6 à 10, **caractérisée en ce que** les surfaces de guidage (34, 35, 43, 44) du corps de soupape (3) et du siège de soupape (4) ont une forme cylindrique dans le sens de l'axe longitudinal (L) du corps de soupape (3).

13. Soupape d'homogénéisation (1) selon l'une des revendications précédentes, **caractérisée en ce que** des canaux (23, 24) communiquant avec la sortie (22) sont prévues dans la cage de soupape (2) en aval du corps de soupape (3).

14. Soupape d'homogénéisation (1) selon la revendication 13, **caractérisée en ce que** les canaux (23, 24) débouchent dans une région de mélange de la sortie (22) ou une chambre de mélange (25) placée en amont de la sortie.

15. Soupape d'homogénéisation (1) selon l'une des revendications précédentes, **caractérisée en ce qu'**un diamètre du logement (42) de forme conique et de la partie du corps de soupape (3) formée avec la surface extérieure d'enveloppe (33) de forme conique augmente vers l'unité d'ajustement (5).

16. Soupape d'homogénéisation (1) selon l'une des revendications précédentes, **caractérisée en ce que** le siège de soupape (4) est monté de façon immobile dans un logement de la cage de soupape (2) ou conçu comme un composant de la cage de soupape (2).

17. Soupape d'homogénéisation (1) selon l'une des revendications précédentes, **caractérisée en ce qu'**une unité constitutive élastique (15) est disposée entre l'unité d'ajustement (5) et le corps de soupape (3).

18. Soupape d'homogénéisation (1) selon la revendication 17, **caractérisée en ce que** l'unité constitutive élastique (15) est conformée comme un paquet de ressorts avec au moins deux rondelles-ressorts.

19. Soupape d'homogénéisation (100) pour un fluide à homogénéiser sous une pression de système, comprenant
- une cage de soupape (120) avec au moins un canal de sortie (122, 123) pour le fluide,
- un siège de soupape (140) disposé dans la cage de soupape (120) le long d'un axe de déplacement (L), avec un logement (142) de forme au moins partiellement conique dans lequel est supporté un corps de soupape (130) fixé sur la cage de soupape (120), possédant une surface extérieure d'enveloppe (133) de forme au moins partiellement conique et un canal d'entrée (131),
- une chambre de pression (170) communiquant avec le canal d'entrée (134), qui est formée dans le logement (42) du siège de soupape (140) et/ou de la surface extérieure d'enveloppe (133) du corps de soupape (130),
- une unité d'ajustement (150) en liaison active avec le siège de soupape (140),
- une résistance d'écoulement à l'intérieur du logement (142) pouvant être régulée par le déplacement du corps de soupape (130) dans le siège de soupape (140),
**caractérisée en ce qu'**un espace de cisaillement est formé des deux côtés de la chambre de pression (170) dans le sens de déplacement du corps de soupape (130), entre la paroi intérieure du siège de soupape (140) formant le logement (42) et le corps de soupape (130), par une lame de sabre (8a, 8b) respective et une région de paroi de forme conique en face de celle-ci, et une chambre d'expansion (9) communiquant avec le canal de sortie (22) est formée derrière l'espace de cisaillement, en aval dans le sens d'écoulement.
